(19) Europäisches Patentamt
European Patent Office
Office européen des brevets

(11) Publication number: 0 075 354
B1

(12) **EUROPEAN PATENT SPECIFICATION**

(45) Date of publication of patent specification: **02.10.85**

(51) Int. Cl.⁴: **C 01 F 5/38**, C 01 C 1/18

(21) Application number: **82201113.6**

(22) Date of filing: **09.09.82**

(54) **Process for the preparation of magnesium nitrate hexahydrate.**

(30) Priority: **17.09.81 NL 8104284**

(43) Date of publication of application:
**30.03.83 Bulletin 83/13**

(45) Publication of the grant of the patent:
**02.10.85 Bulletin 85/40**

(84) Designated Contracting States:
**AT BE DE FR GB IT NL SE**

(56) References cited:
**GB-A-2 045 735**
**US-A-1 844 862**
**US-A-3 173 756**

(73) Proprietor: **UNIE VAN KUNSTMESTFABRIEKEN B.V.**
**Maliebaan 81**
**NL-3581 CG Utrecht (NL)**

(72) Inventor: **Willems, Michael Hendrik**
**Nassaustraat 9**
**NL-6166 BD Geleen (NL)**
Inventor: **Vermijs, Winfried J.W.**
**Dunantstraat 4**
**NL-6164 GN Geleen (NL)**

(74) Representative: **Roeffen, Wilhelmus Johannes Maria et al**
**OCTROOIBUREAU DSM Postbus 9**
**NL-6160 MA Geleen (NL)**

**EP 0 075 354 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a process for the preparation of magnesium nitrate hexahydrate by converting magnesium oxide with nitric acid in the presence of water. The invention also relates to a process for the preparation of thermally stable ammonium nitrate containing granules using the magnesium nitrate hexahydrate thus obtained.

A process for the preparation of magnesium nitrate hexahydrate starting from magnesium oxide, nitric acid and water is known from US patent specification 1,844,862. According to this known process, finely divided magnesium oxide is added to dilute nitric acid whilst stirring, the amount added being sufficient for complete conversion, on which the mixture is allowed to settle, the solid matter is filtered off, the remaining solution is evaporated and finally magnesium nitrate hexahydrate is crystallized out by cooling. A disadvantage of this known process is that a large proportion of the impurities introduced with the magnesium oxide goes into solution, and subsequently, on cooling, to a large extent crystallizes out, together with the magnesium nitrate hexahydrate formed, so that an impure product is obtained, which, in addition, is not easily filtered.

Another disadvantage of this process is that in its practical realization always an excess of water is introduced, which must subsequently be removed through evaporation.

If this product is used in the preparation of thermally stable ammonium nitrate granules, it furthermore causes severe fouling of the evaporators of the ammonium nitrate plant and, if prilling is applied, it gives rise to clogging of the spray openings of the prilling bucket.

The present invention provides a process in which the abovementioned disadvantages do not or hardly occur. According to the invention this is achieved by:

a) Suspending magnesium oxide in melted magnesium nitrate hexahydrate having a temperature in excess of 90°C;

b) Adding to the suspension obtained, whilst stirring, a nitric acid solution, resulting in the formation of more magnesium nitrate hexahydrate;

c) Filtering the liquid reaction mixture while maintaining the temperature of the reaction mixture in steps (b) and (c) in excess of 90°C;

d) Discharging as product a part, corresponding to the amount of magnesium oxide introduced, of the liquid magnesium nitrate hexahydrate obtained as clear filtrate;

e) Utilizing the remaining part as liquid medium for the conversion of magnesium oxide with nitric acid.

In the process according to the invention use can be made of both a chemically pure and the commercially available technical-grade magnesium oxide, for instance obtained b\ calcination of natural magnesite ($MgCO_3$) or c $Mg(OH)_2$, obtained by precipitation of magnesiun compounds from sea water with dolomite Besides 93—96 wt.% magnesium oxide, such technical-grade magnesium oxide product contains a considerable amount of impurities, particularly iron and aluminium oxides, and possibly silicon dioxide. To obtain a good suspension and subsequently a rapid chemical conversion, there is advantage in adding the magnesium oxide in finely divided form to the magnesium nitrate hexahydrate. By preference use is made of magnesium oxide product having an average particle size of at most 200 µm, in particular at most 100 µm, and a specific surface area larger than 12 $m^2/g$.

For obtaining a homogeneous suspension there further is advantage in having the suspension process take place while stirring continuously and intensively.

The amount of magnesium oxide suspended in the magnesium nitrate hexahydrate may be chosen within wide limits. For economic operation of the process, however, it is important to make the amount of magnesium oxide suspended in the magnesium nitrate hexahydrate as large as possible. Of course, this amount must be smaller than the maximum amount of magnesium oxide that is allowable in view of the viscosity of the suspension. In general, such an amount is added that the magnesium oxide concentration of the suspension obtained is 5—25 wt.%.

According to the invention, subsequently a nitric acid solution is added to the resulting mixture, which is meanwhile being stirred. The concentration of the nitric acid solution is chosen so that practically all water introduced with the nitric acid and formed during the reaction is bound as crystallization water in the resulting magnesium nitrate hexahydrate.

Given the gross reaction equation:

$$MgO+2HNO_3+5H_2O \rightarrow Mg(NO_3)_2 \cdot 6H_2O,$$

theoretically this would require an amount of water corresponding to the amount of water in nitric acid with a concentration of 58.33 wt.% $HNO_3$. For practical purposes use is made of a nitric acid having a slightly lower concentration, for instance 53—58 wt.%, in particular about 55 wt.% $HNO_3$, because during the addition of the acid part of the water introduced evaporates due to the strongly exothermic reaction that takes place.

The temperature during the addition of the acid can be chosen within wide limits. At least this temperature must be, as in the suspension process, 90°C, for at lower temperatures crystallization of the magnesium nitrate hexahydrate takes place.

Since at a high temperature the magnesium nitrate hexahydrate decomposes into lower hydrates or basic salts may be formed, the temperature is by preference kept below 120°C. in view of the large amount of reaction heat that

evolves, this will generally necessitate cooling of the mixture during the addition of the acid.

The way in which the acid is added is of great importance in the subject process. It has been found that, on the one hand, if the pH becomes too low (locally) because of a too large acid addition, various impurities, notably iron and aluminium oxides, dissolve, so that they cannot be removed by filtration at a later stage, while on the other hand, of course, part of the magnesium oxide is not converted if the amount of acid added is insufficient.

Since it has been found that the filtration of the mixture if favourably affected by a small amount of non-converted magnesium oxide, by preference use is made of such an amount of nitric acid that 92 to 98 wt.%, in particular about 95 wt.% of the magnesium oxide introduced is converted into magnesium nitrate hexahydrate.

To eliminate the problems attaching to a too large acid addition to the largest possible extent, by preference first such an amount of nitric acid is added to the suspension that the pH of the resulting mixture is 6—6.5, this amount being added at such a rate and while stirring so intensively that the reactants are homogeneously mixed, so that the pH in the mixture locally nowhere decreases to below about 4, and subsequently, whilst stirring, slowly so much nitric acid is added until a pH of 5.2—5.8 has been reached in the mixture. This last addition is stopped when the pH decrease in the mixture, which initially proceeds proportionally with the amount of nitric acid added, stops or proceeds very slowly.

The liquid mixture obtained after this acid addition is subsequently filtered, care being taken that the temperature is kept above 90°C. It has been found that the mixture has very good filtering properties so that, in contrast with the known processes, the use of special filter aids is superfluous. It has been found that the non-converted magnesium oxide is deposited on the filter and as it were covers it with a layer, on which layer subsequently practically all impurities are deposited.

Of the liquid magnesium nitrate hexahydrate obtained as clear filtrate a part, corresponding to the amount of magnesium oxide introduced, is discharged as product, while the remaining part is re-used as liquid medium for conversion of magnesium oxide with nitric acid.

The liquid magnesium nitrate hexahydrate obtained as product can in principle be put to various uses, for instance, as such or after mixing with fertilizer components, as, optionally liquid, fertilizer. The product is also suitable for conversion, without further pretreatment, into, for instance, lower hydrates.

The product is pre-eminently suitable for the stabilization against thermal crystal modifications of ammonium nitrate-containing granules.

To this end, according to the invention a small amount of the liquid magnesium nitrate hexahydrate obtained is added to an ammonium nitrate-containing solution or melt, following which the mixture obtained is granulated in a way known *per se*, optionally after evaporation. The amount of magnesium nitrate hexahydrate to be added for this stabilization may vary. In general, an amount of 0.1—1%, in particular about 0.5 wt.%, calculated as magnesium oxide relative to the amount by weight of ammonium nitrate is added. It has been found that the water content of the final product obtained must be ≤0.5 wt.%. This can be achieved in a known way, for instance by evaporation of the liquid mixture to be granulated or by drying of the granular product.

It is true that the thermal stabilization of ammonium nitrate using magnesium nitrate (hydrates) is known *per se*, see for instance the British patent specifications 914,606 and 988,095, but in these known processes use is made of water-free magnesium nitrate or lower hydrates, often in solution, or use is made of a magnesium nitrate hydrate prepared in another way than in the subject process.

The invention will be elucidated in the following examples.

Example 1

To 600 g melted $Mg(NO_3)_2 \cdot 6H_2O$ having a temperature of 95°C, an amount of 100 g magnesium oxide was added, on which the mixture was stirred for 15 minutes.

As magnesium oxide, use was made of a technical-grade product having an average particle size of <75 µm and a specific surface area of about 50 $m^2/g$ which contained 2000 ppm(*) $Fe_2O_3$, 1800 ppm $Al_2O_3$, 8000 ppm $SiO_2$ and 1.3 wt.% CaO.

Whilst stirring intensively, a 55 wt.% $HNO_3$ solution was added to the suspension obtained, the metering rate being such that after 1 hour the pH of the mixture was 6.0. While the acid was being added, the temperature was kept at about 105°C.

Subsequently, such an amount of 55 wt.% $HNO_3$ was very slowly added to the mixture, which was meanwhile being stirred, that the pH of the mixture was 5.4 after another hour. The temperature was kept at about 95°C. The liquid reaction mixture obtained was filtered, the filtrate obtained being 1175 g clear, liquid $Mg(NO_3)_2 \cdot 6H_2O$ with a crystallization temperature of 88°C which contained <1 ppm $Fe_2O_3$, about 2 ppm $Al_2O_3$ and 1 ppm $SiO_2$.

Of this filtrate, 575 g was discharged as product, while the remaining 600 g was utilized for a further conversion of Mgo with $HNO_3$.

Example 2

To an $NH_4NO_3$ solution containing 4 wt.% water, an amount of 2.9 wt.% $Mg(NO_3)_2 \cdot 6H_2O$, obtained according to the process of Example 1, was added. The liquid mixture, with a temperature of about 160°C, was sideways

(*) ppm: parts per million by weight

sprayed into a circular bed (temp. 135°C) of fluidized $NH_4NO_3$ nuclei (average diameter 2.7 mm, bed height 40 cm) by means of a powerful air stream via a two-phase sprayer. Via an overflow the granules formed were discharged to a sieve, and there they were separated into a fine fraction (<2 mm), a product fraction (2—4 mm) and a coarse fraction (>4 mm). The product fraction, which contained 0.2 wt.% $H_2O$ and 0.5 wt.% MgO, was rapidly cooled to about 35°C in a fluidized bed and subsequently five times heated and cooled between 15 and 50°C. After 5 cycles the product exhibited practically no reduction of the crushing strength (about 45 bar), while only a very slight volume increase had occurred (<2%).

Example 3

A mixture of 97 parts by weight of a 96 wt.% $NH_4NO_3$ solution and 3 parts by weight $Mg(NO_3)_2 \cdot 6H_2O$ (obtained according to the process of Example 1) was evaporated to a water content of 0.2 wt.% and subsequently sprayed in a tower in counterflow with a cool air stream. The prills obtained were cooled to about 45°C in a fluidized bed and subsequently subjected to 5 cycles between 15 and 50°C. The product showed no deterioration in crushing strength and hardly any volume increase.

**Claims**

1. Process for the preparation of magnesium nitrate hexahydrate by converting magnesium oxide with nitric acid in the presence of water, this process being characterized in that

a) Magnesium oxide is suspended in melted magnesium nitrate hexahydrate having a temperature in excess of 90°C;

b) A nitric acid solution is added to the suspension obtained, whilst stirring, resulting in the formation of more magnesium nitrate hexahydrate;

c) The liquid reaction mixture is filtered while maintaining the temperature of the reaction mixture in steps (b) and (c) in excess of 90°C;

d) Of the liquid magnesium nitrate hexahydrate obtained as clear filtrate a part, corresponding to the amount of magnesium oxide introduced, is discharged as product;

e) The remaining part is utilized as liquid medium for the conversion of magnesium oxide with nitric acid.

2. Process according to claim 1, characterized in that use is made of a technical-grade magnesium oxide having an average particle size of at most 200 μm.

3. Process according to claim 1 or 2, characterized in that use is made of a magnesium oxide having an average particle size of at most 100 μm and a specific surface area larger than 12 $m^2/g$.

4. Process according to any one of the claims 1—3, characterized in that 5—25 wt.% magnesium oxide is suspended in the melted magnesium nitrate hexahydrate.

5. Process according to any one of the claims 1—4, characterized in that a nitric acid solution having a concentration of 53—58 wt.% $HNO_3$ is added to the suspension.

6. Process according to any one of the claims 1—5, characterized in that the temperature of the mixture is kept at between 90 and 120°C while the acid is being added.

7. Process according to any one of the claims 1—6, characterized in that such an amount of a nitric acid solution is added to the suspension that 92—98 wt.% of the magnesium oxide is converted into magnesium nitrate hexahydrate.

8. Pocess according to any one of the claims 1—7, characterized in that first such an amount of nitric acid is added to the suspension that the pH of the resulting mixture is 6—6.5, this being done at such a rate and whilst stirring so intensively that the reactants are mixed homogeneously, and subsequently nitric acid is slowly added to the acidified mixture until a pH of 5.2—5.8 has been reached in the mixture.

**Patentansprüche**

1. Verfahren zur Herstellung von Magnesiumnitrat-hexahydrat durch Umsetzung von Magnesiumoxid mit Salpetersäure in Gegenwert von Wasser, durch gekennzeichnet, daß man

a) Magnesiumoxid in geschmolzenem Magnesiumnitrat-hexahydrat mit einer Temperatur von mehr als 90°C suspendiert;

b) eine Salpetersäurelösung zu der erhaltenen Suspension unter Rühren hinzufügt, wodurch mehr Magnesiumnitrathexahydrat gebildet wird;

c) das flüssige Reaktionsgemisch filtriert, während man die Temperatur des Reaktionsgemisches in den Stufen (b) und (c) über 90°C hält,

d) vom flüssigen, als klares Filtrat erhaltenen Magnesiumnitrat-hexahydrat einen Teil, entsprechend der Menge an eingebrachtem Magmesiumoxid, als Produkt austrägt;

e) den verbleibenden Teil als flüssiges Medium für die Umsetzung von Magnesiumoxid mit Salpetersäure verwendet.

2. Verfahren nach Anspruch 1, dadurch gekennzeichnet, daß ein technisch reines Magnesiumoxid mit einer durchschnittlichen Teilchengröße von höchstens 200 μm eingesetzt wird.

3. Verfahren nach Anspruch 1 oder 2, dadurch gekennzeichnet, daß ein Magnesiumoxid mit einer durchschnittlichen Teilchengröße von höchstens 100 μm und einer spezifischen Oberfläche von größer als 12 $m^2/g$ eingesetzt wird.

4. Verfahren nach einem der Ansprüche 1—3, dadurch gekennzeichnet, daß 5—25 Gew.-% Magnesiumoxid im geschmolzenen Magnesiumnitrat-hexahydrat suspendiert werden.

5. Verfahren nach einem der Ansprüche 1—4, dadurch gekennzeichnet, daß die Suspension mit einer Salpetersäurelösung einer Konzentration von 53—58 Gew.-% $HNO_3$ versetzt wird.

6. Verfahren nach einem der Ansprüche 1—5, dadurch gekennzeichnet, daß während des

Zusatzes der Säure die Temperatur des Gemisches zwischen 90 und 120°C gehalten wird.

7. Verfahren nach einem der Ansprüche 1—6, dadurch gekennzeichnet, daß die Suspension mit einer solchen Menge an Salpetersäurelösung versetzt wird, daß 92 bis 98 Gew.-% des Magnesiumoxids zu Magnesiumnitrat-hexahydrat umgesetzt werden.

8. Verfahren nach einem der Ansprüche 1—7, dadurch gekennzeichnet, daß die Suspension zuerst mit einer solchen Menge an Salpetersäure versetzt wird, daß der pH-Wert des resultierenden Gemisches 6 bis 6,5 beträgt, was mit einer solchen Geschwindigkeit und unter so intensivem Rühren erfolgt, daß die Reaktionskomponenten homogen vermischt werden, und sodann Salpetersäure langsam zu dem angesäuerten Gemisch hinzugefügt wird, bis ein pH-Wert von 5,2 bis 5,8 im Gemisch erreicht ist.

**Revendications**

1. Procédé de préparation de l'hexahydrate de nitrate de magnésium par transformation d'oxyde de magnésium avec de l'acide nitrique en présence d'eau, ce procédé étant caractérisé en ce que

a) l'oxyde de magnésium est mis en suspension dans l'hexahydrate de nitrate de magnésium fondu ayant une température supérieure à 90°C;

b) une solution d'acide nitrique est ajoutée à la suspension obtenue, sous agitation, ce qui résulte dans la formation d'une quantité supplémentaire d'hexahydrate de nitrate de magnésium;

c) le milieu réactionnel liquide est filtré tout en maintenant la température du milieu réactionnel dans les étapes b) et c) supérieure à 90°C;

d) de l'hexahydrate de nitrate de magnésium liquide obtenu sous forme de filtrat limpide, une partie, correspondant à la quantité d'oxyde de magnésium introduite, est déchargée comme produit;

e) la partie restante est utilisée comme milieu liquide pour la transformation de l'oxyde de magnésium avec l'acide nitrique.

2. Procédé selon la revendication 1, caractérisé en ce qu'on emploie un oxyde de magnésium de qualité industrielle ayant une grosseur moyenne des particules au plus égale à 200 µm.

3. Procédé selon la revendication 1 ou 2, caractérisé en ce qu'on emploie un oxyde de magnésium ayant une grosseur moyenne des particules au plus égale à 100 µm et une surface spécifique d'une valeur supérieure à 12m$^2$/g.

4. Procédé selon l'une quelconque des revendications 1 à 3, caractérisé en ce que 5—25% d'oxyde de magnésium est mis en suspension dans l'hexahydrate de nitrate de magnésium fondu.

5. Procédé selon l'une quelconque des revendications 1 à 4, caractérisé en ce qu'on ajoute à la suspension une solution d'acide nitrique ayant une concentration de 53—58% en poids de $HNO_3$.

6. Procédé selon l'une quelconque des revendications 1 à 5, caractérisé en ce que la température du mélange est maintenue entre 90 et 120°C pendant l'addition de l'acide.

7. Procédé selon l'une quelconque des revendications 1 à 6, caractérisé en ce qu'on ajoute à la suspension une quantité d'acide nitrique telle que 92—98% en poids de l'oxyde de magnésium soit transformé en hexahydrate de nitrate de magnésium.

8. Procédé selon l'une quelconque des revendications 1 à 7, caractérisé en ce que l'on ajoute d'abord à la suspension une quantité d'acide nitrique telle que le pH du mélange résultant soit de 6—6,5 cette addition étant faite à une vitesse telle et en agitant si intensément que les réactifs soient mélangées de façon homogène, et que l'on ajoute ensuite lentement au mélange acidifié de l'acide nitrique jusqu'à ce que l'on atteigne un pH de 5,2—5,8 dans le mélange.